(19) Europäisches Patentamt
European Patent Office
Office européen des brevets

(11) Publication number: **0 406 590 A2**

# (12) EUROPEAN PATENT APPLICATION

(21) Application number: **90111117.9**

(22) Date of filing: **12.06.90**

(51) Int. Cl.5: **C08J 5/12**, C09D 5/33, B32B 33/00, C09J 175/00, G02B 1/10

(30) Priority: **15.06.89 JP 154232/89**

(43) Date of publication of application: **09.01.91 Bulletin 91/02**

(84) Designated Contracting States: **DE FR GB**

(71) Applicant: **SUMITOMO CHEMICAL COMPANY, LIMITED**
**5-33, Kitahama 4-chome Chuo-ku**
**Osaka(JP)**

Applicant: **NIPPON SHEET GLASS CO. LTD.**
**5-11, Dosho-machi 3-chome**
**Chuo-ku Osaka-shi Osaka(JP)**

(72) Inventor: **Ohno, Tetsuro**
**9-1-502, Tamagawa-1-chome**
**Takatsuki-shi(JP)**
Inventor: **Kawamura, Kazumitsu**
**4-1-501, Kitajocho-2-chome**
**Toyonaka-shi(JP)**
Inventor: **Ueda, Masahiro**
**9-17, Sakuragaoka-4-chome**
**Minoo-shi(JP)**

(74) Representative: **Henkel, Feller, Hänzel & Partnerner**
**Möhlstrasse 37**
**D-8000 München 80(DE)**

## (54) Method for adhering transparent resin to light control resin and light control sheets prepared thereby.

(57) A light control resin can be tightly adhered to a transparent resin by the use of an isocyanate-containing adhesive composition in the form of liquid, whereby a light control sheet is prepared which is excellent in that the light control resin does not separate from the transparent resin.

EP 0 406 590 A2

# METHOD FOR ADHERING TRANSPARENT RESIN TO LIGHT CONTROL RESIN AND LIGHT CONTROL SHEETS PREPARED THEREBY

## BACKGROUND OF THE INVENTION

### Field of the Invention

The present invention relates to a method for adhering a transparent resin to a light control resin which has such characteristic properties that, when rays are irradiated onto the light control resin at specified incidental angles, then the resin will scatter said rays, and that, when the rays are irradiated onto the resin at angles other than said specific angles, the resin will allow the rays to pass through the resin. The present invention also relates to a light control sheet which is a laminate prepared by said adhering method.

### Related Art Statement

A light control resin can be produced by a process wherein an active or actinic ray is irradiated onto a composition comprising two or more photo-polymerizable monomers or oligomers having different refractive indexes. However, such light control resins are rather poor in their strength and weather-proof properties, so that the resins alone do not generally have practical utility.

Therefore, the light control resins are protected with transparent resins or glass articles, in order that a practically usable light control resin assembly can be obtained. Up to now, however, a suitable method have not been known for adhering a light control resin to a transparent resin to form a laminated product.

In the past, there has been proposed a method for adhering a light control resin to a transparent resin such as polymethyl methacrylate resin, polystyrene resin or polycarbonate resin with the aid of an adhesive. In this method, it was observed that the use of an adhesive resulted in an easy separation or release of the light control resin from the transparent resin. The known adhesives do not tightly stick to the light control resin, particularly to the light irradiated surface thereof. Also, it is not so easy to bond the transparent resin to another material with the aid of an adhesive. Thus, a method for tightly adhering a light control resin to a transparent resin has not been known. Also, an improved adhesive suitable for this purpose has not been known.

## SUMMARY OF THE INVENTION

The present invention provides a novel method for adhering a light control resin to a transparent resin with the aid of an adhesive composition having isocyanate radicals.

The present invention also provides a laminate prepared by employing said method.

## DETAILED DESCRIPTION OF THE INVENTION

The light control resins, which can be used in the present invention, are classified into three groups. The light control resins of the first group are those which have been prepared by subjecting a composition comprising two or more photo-polymerizable monomers or oligomers having different refractive indexes to a curing operation under the radiation of an active light such as ultraviolet light. The starting materials for the preparation of the light control resins of the first group include monomers or oligomers each having at least one polymerizable radical such as acryloyl, methacryloyl, vinyl or allyl radical, or the like. Examples of these materials are polyfunctional acrylates such as polyester acrylates, polyol polyacrylates, modified polyol polyacrylates, polyacrylates having isocyanuric acid radicals, melamine acrylates, polyacrylates having hydantoin radicals, polybutadiene acrylates, epoxy acrylates, urethane acrylates; methacrylates corresponding to the above-mentioned acrylates; monofunctional acrylates such as tetrahydrofurfuryl acrylate, ethyl carbitol acrylate, dicyclopentenyloxyethyl acrylate, phenyl carbitol acrylate, nonylphenoxyethyl acrylate, 2-hydroxy-3-phenoxypropyl acrylate, ω-hydroxyhexanoyloxyethyl acrylate, acryloyloxyethyl succinate, acryloyloxyethyl phthalate, tribromophenoxyethyl acrylate, isobornyl acrylate, 2-ethylhexyl acrylate, lauryl acrylate, 2,2,3,3-tetrafluoropropyl acrylate; methacrylates corresponding to the monofunctional

acrylates mentioned above; N-vinyl pyrrolidone, triallyl isocyanurate, diethylene glycol bisallyl carbonate, diallylidene pentaerythritol and the like. These compounds are usually used as a mixture of plural compounds.

The light control resins of the second group are those which have been prepared according to a process wherein a combination of a component A and a component B is subjected to a curing operation under the radiation of an active light. The component A comprises a compound having a polymerizable carbon-carbon double bond in the molecule, and the component B comprises a compound having no polymerizable carbon-carbon double bond, with the proviso that the refractive index of the component A is different by at least 0.01, preferably at least 0.02, from that of the component B.

The component A is preferably a compound selected from the class consisting of the monomers and the oligomers which are the same as those employed in the ligh control resins of the first group.

The component B is preferably a compound which does not have a polymerizable radical such as acryloyl, methacryloyl, vinyl or allyl radical in the molecule. Examples of the component B are certain polymers including polystyrenes, polymethyl methacrylates, polyethylene oxides, polyvinyl pyrrolidones, polyvinyl alcohols, nylons and the like; and certain organic chemicals including toluene, n-hexane, cyclohexane, methyl alcohol, ethyl alcohol, acetone, methyl ethyl ketone, tetrahydrofuran, ethyl acetate, dimethyl formamide, dimethyl acetamide, acetonitrile; organohalogen compounds; organosilicon compounds; additives for plastics such as plasticizers, stabilizers and the like.

Uncured component A, having a polymerizable double bond, must be one which is homogeneously miscible with uncured component B having no polymerizable double bond. Furthermore, the refractive index of the component A should be different by at least 0.01, preferably at least 0.02 from that of the component B.

The proportion of the component A having a polymerizable double bond, to the component B having no polymerizable double bond may be selected depending on the natures of these compounds. Preferably, the component A is employed in an amount of from 10 to 99% by weight, and the component B is employed in an amount of from 90 to 1% by weight. More preferably, the component A is used in an amount of 50 to 95% by weight, while the component B is used in an amount of from 50 to 5% by weight.

The light control resins of the third group are those which can be prepared by curing, under the radiation of active ray, a compound having at least two polymerizable carbon-carbon double bonds in the molecule, with the proviso that the refractive index of the compound before the curing is different by at least 0.01 from that of said compound after the curing.

The compounds, which can be used for the preparation of the light control resins of the third group, are monomers or oligomers each having at least two polymerizable radicals such as acryloyl, methacryloyl, vinyl or allyl radicals or the like in the molecule, with the proviso that the refractive index of each compound before the curing is different by at least 0.01 from said compound after the curing. Examples of the compounds are triethylene glycol diacrylate, polyethylene glycol diacrylates, neopentyl glycol diacrylate, 1,6-hexanediol diacrylate, hydrogenated dicyclopentadienyl diacrylate, ethylene oxide-modified bisphenol A diacrylate, trimethylol propane triacrylate, pentaerythritol hexaacrylate, tris-acryloyl isocyanurate, polyfunctional epoxy acrylates, polyfunctional urethane acrylates; methacrylates corresponding to these acrylates, divinyl benzene, triallyl isocyanurate, diethylene glycol bisallyl carbonate, etc.

In order to produce the light control resins having a sufficient light-scattering properties, the refractive index of the compound before the curing should be different by at least 0.01, preferably at least 0.02 from that of said compound after the curing. The light control resins can be prepared by using these compounds alone, although it is possible a combination of these compounds and other compounds.

According to the present invention, the light control resins are applied to a substrate, or are placed as a film in a cell. The resins are then gradually cured under the radiation of a light in a specified direction. The light control resins selectively scatter an incidental ray only at a specific angle. If desired, a photopolymerization initiator may be added to the resin compositions. Various kind of light, including visible light, ultra violet light and the like, may be used for the curing reaction.

Ultraviolet light may be irradiated from a mercury lamp, a metal halide lamp or the like. When a ray is irradiated from a bar lamp onto a sheet of the cured resin under a selected radiation condition, then the resin sheet will show an anisotropy in the directions of the major axis and the minor axis of the bar lamp. Only in the case where the sheet resin is rotated around the major axis of the bar lamp, the sheet resin will scatter the light at a specific angle. As a source for visible light, use may be made of an incandescent lamp or parallel laser rays having a wavelength in a visible region.

The transparent resins, which is employed in the present invention, are those which are satisfactorily transparent and can protect the light control resins. The transparent resins may have a shape of film or sheet. As the transparent resins, there may be used polymethyl methacrylates, polycarbonates, polyethylene terephthalates, polyvinyl chlorides and polystyrenes. Particularly, polymethyl methacrylates, polycarbonates and polyethylene terephthalates are suitable transparent resins for the present invention.

In the present invention, there may be used various additives including colorants, UV-absorbers, stabilizers and the like, as far as the use thereof does not give any adverse infuences on the effects of the present invention.

The isocyanate radical-containing compositions, employed in the present invention, may be those which comprises an isocyanate-containing compounds alone. There may be also used a combination of an isocyanate-containing compound and an isocyanate-reactive compound, as so-called adhesive of two liquid type, which are mixed with each other prior to use. The isocyanate-reactive compounds include compounds having a hydroxyl, amino or carboxyl radical or the like.

As the isocyanate radical-containing compositions for the present invention, there may be used not only a compound which has been obtained by a reaction of an isocyanate with a terminal hydroxy radical of a reaction product of a dibasic acid with a polyhydric alcohol, but also polyisocyanates and the like.

Preferably, an organic solvent, which can be easily dried, may be used for dissolving therein the isocyanate radical-containing compositions. Examples of such solvents are ethyl acetate, methyl ethyl ketone, acetone, cellosolve acetate, toluene, xylene, methylene chloride and the like.

Certain commercial polyurethane adhesives contain such a solvent. Accordingly, these commercial adhesives may directly be used or may be further diluted for the use in the present invention. For instance, there may be used a solvent-containing polyurethane adhesive of one liquid type or two liquid type. On the other hand, when a solvent-free adhesive is used, a light control resin will not tightly adhere to a transparent resin, so that the former resin will easily separate from the latter resin.

In the adhering step, the solvent seems to play an important role. Namely, it is considered that the solvent etches the transparent resin, so that a strong bond is formed between the two resins in question due to an anchor effect.

A solvent-containing polyurethane adhesive of two liquid type can form a urethane bond by a reaction of a polyisocyanate with a polyol. Polyols can be classified into polyester polyols and polyether polyols. As compared with a polyether polyol-containing adhesive, a polyester polyol containing adhesive has a stronger adhesion power, and is therefore more suitable for the present invention.

It is also suitable for the present invention to use an adhesive, which has been produced from an isocyanate compound and a polyester polyurethane polyol obtained by a reaction of a relatively low molecular weight polyester polyol with an isocyanate compound.

Furthermore, it is advantageous to employ an adhesive, which comprises a modified polyester composition obtained by adding a carboxyl radical to a terminal of the molecule contained in the above-mentioned unmodified polyester composition.

When a solution of an isocyanate radical-containing composition in a solvent is applied to a surface of a transparent resin according to the present invention, any coating methods may be used as far as they can coat the solution homogeneously. For example, there may be employed roll coaters, gravure coaters, curtain coaters, spin coaters, bar coaters and knife coaters.

A laminate of a light control resin with a transparent resin according to the present invention may be produced by a laminating method. Any laminating methods can be employed if they can produce a uniform laminate having a good appearance. For instance, a roll laminating method or a press laminating method may be employed.

The light control sheets according to the present invention comprises a light control resin and a transparent resin strongly adhered to said light control resin. On the other hand, according to the prior art, a light control resin easily separates from a transparent resin. Thus, the present invention provides an improvement of the prior art. In the case of the light control sheets according to the invention, any undesired separations do not easily occur even if there is a change in the environmental conditions. Therefore, the light control sheets according to the present invention can be used under any severe conditions.

The light control sheets according to the invention can be used in various field, including window means, displays, cars, mirrors, indicator panels, greenhouses, etc.

The present invention will be illustrated in more detail by reference to Examples. However, it should be noted that the scope of the present invention is not limited only to the Examples.

Example 1

(1) Preparation of light control resin

In this Example, use was made of a polyetherurethane acrylate (refractive index = 1.481) obtained by a reaction of a polypropylene glycol having an average molecular weight of 2000, toluene diisocyanate and 2-hydroxyethyl acrylate. Fifty parts of the polyetherurethane acrylate, fifty parts of a compound (refractive index = 1.567) having the formula:

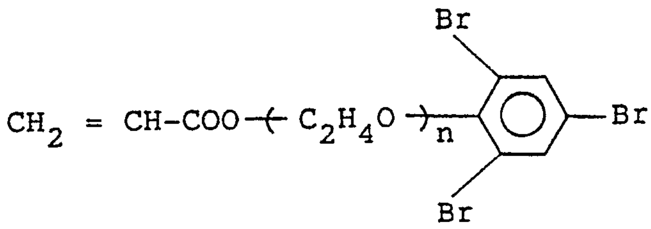

(I)

(wherein n is 2.5 on an average),
and 3 parts of 2-hydroxy-2-methyl-propiophenone were mixed with one another to form a resin composition. The resin composition was applied onto a substrate to form a layer having a thickness of 300 µm. A mercury lamp (80 W/cm), having a length of 70 cm, was set at a height of 100 cm, and an ultraviolet irradiation was made onto the resin layer for 1 minute to cure the resin. The resulting cured resin was separated from the substrate, whereby the aimed light control resin was obtained.

(2) Preparation of solution of isocyanate-containing composition

Use was made of a compound obtained by a process, wherein adipic acid was reacted with ethylene glycol and with neopentyl glycol to form an ester, and wherein a terminal hydroxyl radical of said ester was then reacted with toluene diisocyanate. The resulting compound has a molecular weight of about 6,000 and has the formula:

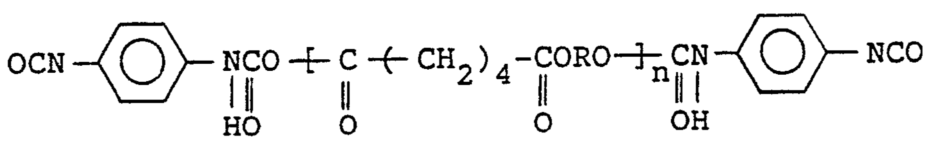

wherein R represents a radical of any of the formulas:

$-CH_2CH_2-$ and 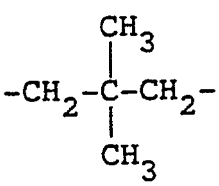

The compound was dissolved in methyl ethyl ketone to prepare a 50% solution.

(3) Preparation of light control sheet

The transparent resin employed here was a commercial polymethyl methacrylate sheet having a thickness of 1 mm, which was sold under a tradename of Sumipex (registered trademark) SxE-000 by Sumitomo Chemical Co., Ltd. The solution of isocyanate radical-containing composition mentioned above was applied onto each of the 2 transparent resin sheets, which sheets were then dried in an oven at 70°C for 60 seconds.

Next, the ultraviolet ray-irradiated surface and the opposite surface of the light control resin sheet, which had been prepared in the stage (1), were individually bonded to the polymethyl methacrylate sheets by a

roll bonding method. The resulting laminate was kept standing for 1 week.

(4) Tests

Peeling test

The adhesion strength between the transparent resin and the light control resin was evaluated by a 180° peeling test. The pull rate was 50 mm/minute, and the width of the test piece was 25 mm. As the test piece, use was made of a laminate prepared by adhering the transparent resin only to one surface of the light control resin.

Weathering test

A water-proof test was conducted at 65° C and under a 95% RH for 1,000 hours. A high temperature test was made at 80° C for 1,000 hours. After these tests, an observation was made on the change of appearance. The test results are shown in Table 1.

Example 2

A light control sheet was prepared and tested according to a method similar to that shown in Example 1, except that the solution of the isocyanate radical-containing composition employed in Example 2 was a commercial product, Technodyne UO9 sold by Taoka Chemical Co., Ltd. The results are shown in Table 1.

Example 3

A light control sheet was prepared and tested by a method similar to that shown in Example 1, except that Example 3 includes the features mentioned below.

As the solution of the isocyanate radical-containing composition, use was made of a solution which had been prepared by mixing a major component with a curing agent in a mixing ratio of 100 : 7. The major component was Adcoat 122, a commercial solution manufactured by Toyo Morton Co., Ltd. The curing agent was CAT-10, a commercial product manufactured by Toyo Morton Co., Ltd.

As the transparent resins, use was made of a polymethyl methacrylate, a polycarbonate (Polica Ace, manufactured by Tsutsunaka Plastic Industry Co., Ltd.), and polyethylene terephthalate (Toyobo Co., Ltd.).

The test results are shown in Table 1.

Comparative Examples 1 to 5

The light control resin was bonded to the transparent resin with the aid of any of the below-mentioned adhesives. The resultant light control sheets were subjected to a peeling test and to a weathering test.

Comparative Example 1 ... Commercial pressure sensitive adhesive double coated Tape (acrylic adhesive), manufactured by N Company.

Comparative Example 2 ... Commercial epoxy adhesive, manufactured by S Company.

Comparative Example 3 ... Commercial cyanoacrylate adhesive, manufactured by T Company.

Comparative Example 4 ... Commercial vinyl adhesive, manufactured by K Company.

Comparative Example 5 ... Commercial solvent-free polyurethane adhesive, manufactured by K Company.

Table 1

| | Transparent resin | Peeling strength (Kg/25 mm) | | Weathering test | |
|---|---|---|---|---|---|
| | | UV-irra-diated side | Back side | Water-proof test | High temp. test |
| Example 1 | Polymethyl methacrylate | 5.2 | 5.5 | good | good |
| " 2 | Polymethyl methacrylate | 6.0 | 6.6 | good | good |
| " 3 | Polymethyl methacrylate | >8 | >8 | good | good |
| | Polycarbonate | >8 | >8 | good | good |
| | Polyethylene tere-phthalate | >8 | >8 | good | good |

- cont'd -

Table 1 (cont'd)

| | | | | | |
|---|---|---|---|---|---|
| Comparative Example 1 | Polymethyl methacrylate | 0.8 | 0.8 | poor | poor |
| " 2 | Polymethyl methacrylate | 0.1 | 0.2 | poor | poor |
| | Polycarbonate | 0.2 | 0.3 | poor | poor |
| " 3 | Polymethyl methacrylate | 0.2 | 0.2 | poor | poor |
| " 4 | Polymethyl methacrylate | 0.8 | 1.5 | poor | poor |
| | Polyethylene tere-phthalate | 1.1 | 1.4 | poor | poor |
| " 5 | Polymethyl methacrylate | 0.2 | 0.2 | poor | poor |

Weathering test (observation of appearance):

"good" ... good appearance

"poor" ... poor appearance

## Claims

1. A method for adhering a light control resin to a transparent resin by using an isocyanate radical-containing adhesive composition.
2. A method according to claim 1, wherein said light control resin is one which has been prepared by a

process, wherein a composition comprising at least two photo-polymerizable monomers or oligomers having different refractive indexes are cured under the radiation of an active ray.

3. A method according to claim 1, wherein said light control resin is one which has been prepared by a process, wherein a composition comprising a combination of a component A having a polymerizable carbon-carbon double bond, and a component B having no polymerizable carbon-carbon double bond, is cured under the radiation of an active ray, with the proviso that the refractive index of the component A is different by at least 0.01 from that of the component B.

4. A method according to claim 1, wherein said light control resin is one which has been prepared by a process, wherein a compound having a plurality of polymerizable carbon-carbon double bonds is cured under the radiation of an active ray, with the proviso that the refractive index of the compound before the curing is different by at least 0.01 from that of said compound after the curing.

5. A method according to any of claims 1 to 4, wherein said transparent resin is selected from the class consisting of polymethyl methacrylates, polycarbonates, polyethylene terephthalates, polystyrenes and polyvinyl chlorides.

6. A method according to claim 1, wherein said adhesive composition is in the form of liquid.

7. A method according to claim 1, wherein said adhesive composition is an isocyanate-containing compound alone or a combination of an isocyanate-containing compound and an isocyanate-reactive compound.

8. A light control sheet, which is a laminate comprising a light control resin, a transparent resin and an intermediate layer interposed between the light control resin and the transparent resin, said intermediate layer being composed of an isocyanate radical-containing adhesive composition.